# FASCICULE DE BREVET EUROPEEN

(11) **EP 0 309 312 B1**
(45) Date de publication et mention de la délivrance du brevet: **03.02.1993**
(21) Numéro de dépôt: 88402275.7
(22) Date de dépôt: 09.09.1988
(51) Int. Cl.: C01G 15/00, C22B 3/00

(54) **Procédé de récupération de gallium par extraction liquide-liquide**
Verfahren zur Rückgewinnung von Gallium mittels Flüssig-Flüssig-Extraktion
Process for the recuperation of gallium by liquid-liquid extraction

(30) Priorité: 21.09.1987 FR 8713024
(43) Date de publication de la demande: 29.03.1989
(73) Titulaire: RHONE-POULENC CHIMIE, 92408 Courbevoie Cédex (FR)
(72) Inventeur: Sabot, Jean-Louis, F-78600 Maisons Laffitte (FR); Fitoussi, Richard, F-94160 Saint-Mande (FR)
(74) Mandataire: Esson, Jean-Pierre

(56) Documents cités:
- EP-A- 0 145 659
- EP-A- 0 290 318
- FR-A- 2 277 897
- FR-A- 2 495 600
- FR-A- 2 495 601
- FR-A- 2 532 295
- FR-A- 2 532 296

## Description

La présente invention concerne un procédé de récupération de gallium par extraction liquide-liquide, à partir de solutions aqueuses très basiques contenant du gallium, comme par exemple, les lessives d'aluminate de sodium du procédé BAYER de fabrication d'alumine.

On connaît, notamment d'après les demandes de brevet français n^{o} 2 277 897, 2 307 047, 2 307 882, 2 495 601, 2 532 295, 2 532 296, un procédé de récupération du gallium présent dans des solutions aqueuses alcalines par extraction liquide/liquide au moyen d'une phase organique contenant un extractant et un solvant organique, et un procédé de purification de la solution de gallium permettant notamment d'éliminer certains autres cations, tel que par exemple les cations aluminium et sodium coextraits avec le gallium à partir des lessives d'aluminates citées précédemment.

Ce procédé consiste à faire passer le gallium contenu dans la solution fortement basique, dans la phase organique d'extraction par un procédé d'extraction liquide-liquide. Dans une deuxième étape, cette phase organique est traitée par une solution acide pour en extraire le gallium, les cations aluminium et sodium étant également extraits.

La solution acide de gallium contenant des ions aluminium et sodium est ensuite traitée pour séparer le gallium de ces ions métalliques.

Pour cela, il a été proposé de nombreux procédés et notamment, à titre d'exemple, les procédés décrits dans les brevets français n^{o} 2 495 599, 2 495 600 et 2 495 601 de la demanderesse.

Ces procédés consistent soit à traiter la solution de gallium par passage sur une résine échangeuse d'ions du type fortement basique, soit d'extraire le gallium par une extraction liquide-liquide, les agents extractants pouvant être des sels d'ammonium quaternaire, des alcools, par exemple.

La solution de gallium obtenue peut ensuite subir de nouvelles étapes de purification.

La solution finale de gallium est ensuite traitée par différents procédés pour produire du gallium métal de très grande pureté, ou des alliages de gallium avec d'autres composés.

Le procédé décrit ci-dessus permet d'obtenir avec de très bons rendements d'extraction et de récupération une solution de gallium de très grande pureté. Toutefois, la deuxième étape du procédé, à savoir le traitement de la phase organique par une solution acide requiert la consommation d'une quantité importante de solution acide qui est rejetée comme effluent après utilisation. Ces effluents liquides importants sont un inconvénient requérant un traitement avant leur rejet et augmentant le coût du procédé.

La présente invention a, notamment, pour but de remédier à ces inconvénients, en proposant un procédé permettant d'une part de diminuer la consommation d'acide et d'autre part de diminuer de manière notable la quantité d'effluents rejetés. Ainsi, l'invention permet d'améliorer sensiblement la valeur économique du procédé.

A cet effet, l'invention propose un procédé de récupération de gallium contenu dans des solutions aqueuses très basiques, par extraction liquide/liquide au moyen d'une phase organique constituée principalement d'un extractant organique et d'un solvant organique, comprenant les étapes suivantes :
(i) extraire le gallium de la solution très basique par la phase organique précitée,
(ii) extraire le gallium de ladite phase organique avec une solution acide,
(iii) ajuster la concentration en ions halogènures de la solution acide de gallium obtenue,
(iv) extraire sélectivement le gallium de cette solution acide,
(v) récupérer le gallium ainsi extrait,
caractérisé en ce que la solution acide utilisée dans l'étape (ii) est constituée par au moins une partie de la solution acide récupérée dans l'étape (iv) après extraction sélective du gallium.

Les différentes étapes (i) à (v) ont déjà été décrites dans de nombreux brevets et notamment dans les demandes de brevet français n^{o} 2 277 897, 2 307 047, 2 307 882, 2 495 601, 2 532 295, 2 532 296, dont les textes font partie intégrante de la présente demande.

Ainsi, l'extraction du gallium de la phase organique (ii) est réalisée selon un procédé d'extraction liquide-liquide par une solution acide ayant une concentration en H⁺ et un débit d'alimentation tels que la concentration en ions H⁺ de la solution acide en contact avec la solution organique qui entre dans l'étape (ii) soit supérieure ou égale à 1,5 N de préférence 1,5 à 6 et avantageusement de 3,5 à 4,5, pour une concentration en halogène inférieure ou égale à 2,5 M.

Comme acides convenables à l'invention, on peut citer à titre d'exemples, les acides minéraux tels que l'acide sulfurique, l'acide phosphorique, l'acide nitrique, et l'acide chlorhydrique en mélange avec un autre acide.

L'étape iv d'extraction sélective du gallium à partir de la solution acide peut être effectuée selon de nombreux procédés déjà décrits dans des brevets et publications.

On peut citer à titre d'exemple, les procédés d'extraction liquide-liquide utilisant comme agent extractant un ou plusieurs agents solvatants tels que, par exemple, des éthers, des cétones, alcools, esters ou composés organophosphorés, ou des agents anioniques d'extraction tels que, par exemple, les amines ou sels d'ammonium quaternaire.

Il est également possible d'extraire sélectivement le gallium par passage de la solution acide de gallium sur une résine échangeuse d'ions. Les résines convenables pour l'invention sont celles du type basique, capables de retenir le gallium, certainement sous une forme de complexe anionique GaX₄⁻, X représentant un halogène, de préférence le chlore ou le brome et avantageusement le chlore.

A titre d'exemple, on peut citer les résines décrites dans le brevet français n^{o} 2 495 601 et qui comportent des motifs de formules : 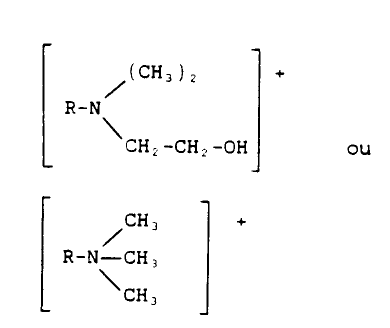
dans lesquelles R représente, par exemple, un copolymère styrène-divinylbenzène ou acrylique-divinylbenzène. On utilise, par exemple, les produits commercialisés sous les marques déposées : Dowex 1, Dowex 2, Dowex 3, Duolite A 101 D, Duolite A 42, Lewatit M 500, Amberlite IRA 400, Amberlite IRA 410, Amberlite IRA 900, Amberlite IRA 910, Duolite A 14, Amberlite IR 45.

La phase organique utilisée dans l'étape (i) comprend un extractant qui est de préférence une hydroxyquinoléine substituée, par exemple la 7-(5,5,7,7-tétraméthyl-1-octène-3-yl)-8-hydroxyquinoléine, les hydroxyquinoléines commercialisées sous les dénominations Kelex 100, par la Société Schering ou LIX 26 par la Société HENKEL. On peut également utiliser comme phase organique, celles notamment décrites dans les brevets français n^{o} 2 277 897, 2 307 047, 2 307 882, 2 532 295, 2 532 296, les demandes de brevet japonais n^{o} 60 042 234, 59 186 683, 59 500 24, la demande de brevet européen n^{o} 199905. De façon plus générale, l'invention s'applique avec toute phase organique permettant d'extraire le gallium selon un procédé comprenant les étapes (i) à (v) précitées.

Brièvement, la phase organique comprend l'extractant, un solvant par exemple du kérosène, un ou plusieurs composés à fonctions alcools tels que des alcools lourds ou phénols lourds ainsi que divers autres composés solvatants tels que certains esters phosphoriques. Il est également avantageux d'ajouter des composés accélérant la vitesse d'extraction du gallium tels que des composés contenant au moins une fonction acide carboxylique, des composés organophosphorés ou des sulfates ou sulfonates substitués.

La concentration en agent extractant n'est pas critique, et est généralement de l'ordre de 10 %.

On peut également utiliser comme phase organique, un polymère chargé avec une hydroxyquinoléine substituée tel que décrit dans la demande japonaise n^{o} 6042234, l'étape (ii) du procédé devenant une opération d'élution du polymère chargé.

La demande japonaise n^{o} 59186683 décrit l'utilisation d'un mélange d'hydroxyquinoléines substituées à savoir un mélange de 7-alkyl-8-hydroxyquinoléine et de 7-(5,5,7,7, tétraméthyl-1-octène-3-yl)-8-hydroxyquinoléine.

L'invention permet donc de réduire l'introduction d'acide au niveau de l'étape (ii). En effet au moins une partie de la solution de lavage de la phase organique est constituée par la solution acide récupérée à l'étape (iv).

Cette réduction de la consommation totale d'acide permet d'améliorer la rentabilité du procédé et de diminuer fortement la quantité d'effluents liquides rejetés.

Le recyclage de la solution acide dans l'étape (ii) n'affecte pas le rendement de l'extraction des cations métalliques de la phase organique.

Selon une autre caractéristique de l'invention, l'ajustement de la concentration en ions halogénures de l'étape (iii) est réalisé par addition d'acide chlorhydrique sous forme gazeuse ou en solution concentrée.

Dans l'étape (iii), la concentration en ions halogénures est ajustée à une valeur comprise entre 3,5 M et 8 M environ.

Cet ajustement est réalisé par l'addition d'acide halogéné sous forme gazeuse ou en solution concentrée.

Comme ions halogénures préférés de l'invention, on peut citer les ions chlorures et bromures, l'ion chlorure étant avantageusement préféré.

Selon une autre caractéristique de l'invention, la concentration en ions H⁺ et Cl⁻ (ou halogène) et le débit de recyclage de la solution acide récupérée à l'étape (V) sont controlés et ajustés si nécessaire pour respecter les valeurs de concentration en ions H⁺ et Cl⁻ dans l'étape (ii) décrite précédemment.

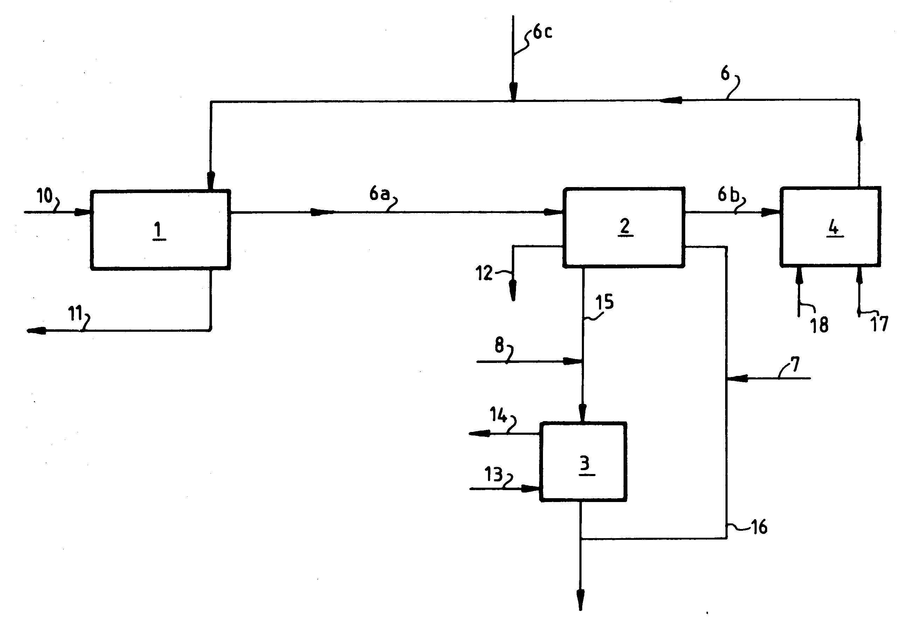

D'autres avantages, buts et caractéristiques de l'invention apparaîtront plus clairement au vu de la figure annexée et des exemples donnés ci-dessous uniquement à titre indicatif et d'illustration de l'invention.

La figure unique représente un schéma synoptique du procédé de l'invention.

### Exemple 1

Dans un appareil d'extraction liquide-liquide 1, on alimente par la conduite 6, 1.000 l d'une phase organique de composition pondérale suivante :

| | |
|---|---|
| Kelex 100 | 8 % |
| n-décanol | 10 % |
| Acide versatic | 5 % |
| Kérosène | 77 % |

On alimente également 1.000 l de solution décomposée d'aluminate de sodium issue d'un procédé Bayer de fabrication d'aluminium. Cette solution contient notamment :

| | |
|---|---|
| Al₂O₃ | 82 g/l |
| Na₂O | 166 g/l |
| Ga | 240 mg/l |

La solution décomposée, après mélange avec la phase organique et séparation de celle-ci est soutirée par la conduite 11 pour, par exemple, être recyclée dans le procédé BAYER. Cette solution a, après traitement, la composition suivante :

| | |
|---|---|
| Al₂O₃ | 80 g/l |
| Na₂O | 156 g/l |
| Ga | 80 mg/l |

Les concentrations en gallium, alumine et oxyde de sodium dans la phase organique sont les suivantes :

| | |
|---|---|
| Al₂O₃ | 2 g/l |
| Na₂O | 10 g/l |
| Ga | 160 mg/l |

Cette phase organique est ensuite alimentée dans un appareil d'extraction liquide-liquide 2 par la conduite 6a.

On opère le lavage de la phase organique par une solution acide alimentée par la conduite 16 et provenant de l'étape (iv) mise en oeuvre dans l'appareil 3.

Dans cet appareil 2, on met en contact 1 000 l de phase organique précipitée avec 100 l de la solution acide provenant de l'appareil 3 par la conduite 16, 80 l d'eau et 20 l d'acide sulfurique concentré (36 N) par la conduite 7.

Cette solution acide a une concentration en H₂SO₄ égale à 2 mole/litre, en HCl à 2 mole/litre et en chlorures métalliques (sodium et aluminium) à 2 mole/litre (exprimée en Cl⁻).

Après agitation et séparation des phases, la phase organique est évacuée par la conduite 6b vers un appareil d'extraction 4 où elle subira plusieurs lavages avec de l'eau avant d'être recyclée dans l'extracteur 1 par la conduite 6, après addition éventuelle de solvant organique frais par la conduite 6c.

La solution acide récupérée contient :

| | |
|---|---|
| Ga | 0,75 g/l |
| Al₂O₃ | 9 g/l |
| Na₂O | 45 g/l |
| H⁺ | 4N |
| Cl⁻ | 2M |

Cette solution contient également de nombreux autres cations métalliques dont les concentrations sont de l'ordre de 10 à 200 mg/l.

Avant d'extraire le gallium de cette solution dans l'appareil 3, on ajuste la concentration en ions chlorure de celle-ci par addition d'acide chlorhydrique gazeux par la conduite 8 à une valeur de 4 M.

Cette solution est alimentée par la conduite 15 selon un débit de 11/h dans des colonnes contenant 0,6 l de résine Duolite A 101 du type ammonium quaternaire.

La solution acide récupérée par la conduite 16 contient :

| | |
|---|---|
| Ga | 10 mg/l |
| H₂SO₄ | 2 moles/l |
| HCl | 2 moles/l |
| Al₂O₃ | 9 g/l |
| Na₂O | 45 g/l |

50 % de cette solution acide sont recyclés par la conduite 16 dans l'extracteur 2, constituant ainsi la solution d'acide d'extraction de la phase organique.

L'acide d'extraction du gallium de la phase organique circule en boucle fermée dans le procédé, avec une purge de l'ordre de 50 %. Ainsi, la consommation en acide peut être diminuée de 50 % environ, diminution représentant une économie importante, tant sur la consommation des réactifs que sur le traitement des effluents.

Le gallium retenu sur la résine de l'extracteur 4 est récupéré par élution de la résine avec de l'eau (1 l/h) alimenté par la conduite 13 et récupéré par la conduite 14.

La solution obtenue contient :

| | |
|---|---|
| Ga | 52 g/l |
| Al₂O₃ | 5 mg/l |
| Na₂O | 20 mg/l |
| Fe | 100 mg/l |

autres cations métalliques de l'ordre de quelques mg/l.

Cette solution concentrée de gallium peut être soumise ensuite à des purifications successives selon des méthodes connues, telles que, par exemple, extraction liquide-liquide, traitement sur résines.

Ces opérations de purification sont d'un coût très réduit car le volume de solution à traiter est faible en raison de la concentration élevée en gallium.

### Exemple 2

La solution acide de gallium à 0,75 g/l de l'exemple 1 sortant de l'appareil 2 par la conduite 15 est alimentée dans l'appareil 3 d'extraction après ajustement de la concentration en ions chlorure à 6 mole/l par addition de chlorure d'hydrogène par la conduite 8.

Le gallium est extrait de cette solution par un procédé d'extraction liquide-liquide utilisant comme agent extractant un sel d'ammonium quaternaire commercialisé par la société HENKEL sous la dénomination Aliquat 336, en solution dans un solvant commercialisé sous la dénomination Solvesso 150, avec une concentration de 0,1 M.

Cette extraction est mise en oeuvre dans une batterie d'extracteurs liquide-liquide montés en série.

La solution acide de gallium est alimentée dans un extracteur intermédiaire selon un débit de 10 l/h, l'agent extractant est alimenté à une extrémité de la batterie sous un débit de 2 l/h et est lavé en sortie de batterie par une solution d'acide chlorhydrique 6N alimentée avec un débit de 1 l/H.

Le gallium est reextrait de l'agent extractant par lavage à l'eau. La solution de gallium obtenue contient 7 g/l de gallium et est épurée en fer, sodium, aluminium (elle contient moins de 100 mg/l de chacun de ces éléments). La purification de cette solution peut être réalisée par tout procédé connu.

La solution acide récupérée par la conduite 16 contient 6 mole/l d'ions chlorure et a une concentration en H⁺ égale à 8 N.

33 % de cette solution est recyclé vers l'appareil 2 d'extraction du gallium.

## Revendications

1. Procédé de récupération de gallium contenu dans des solutions aqueuses très basiques par extraction liquide/liquide au moyen d'une phase organique constituée principalement d'un extractant organique et d'un solvant organique, comprenant les étapes suivantes :
(i) extraire le gallium de la solution très basique par la phase organique précitée,
(ii) extraire le gallium de ladite phase organique avec un acide,
(iii) ajuster la concentration en ions halogénures de la solution acide de gallium obtenue à l'étape (ii),
(iv) extraire sélectivement le gallium de cette solution acide,
(v) récupérer le gallium ainsi extrait,
caractérisé en ce que la solution acide utilisée dans l'étape (ii) est constituée par une partie de la solution acide récupérée dans l'étape (iv) après extraction sélective du gallium.

2. Procédé selon la revendication 1 ou 2, caractérisé en ce qu'on ajuste la concentration en ions halogénures dans l'étape (iii) à une valeur comprise entre 3,5 M et 8 M.

3. Procédé selon la revendication 1, 2 ou 3, caractérisé en ce que l'ajustement de la concentration en ions halogénures de l'étape (iii) est réalisé par addition d'acide chlorhydrique gazeux ou en solution.

4. Procédé selon l'une des revendications précédentes, caractérisé en ce que la solution acide de gallium sortant de l'étape (ii) a une concentration en ions H⁺ égale ou supérieure à 1,5 N et de préférence comprise entre 1,5 et 6 N, la concentration en ions halogénures étant au plus égale à 2,5 M.

5. Procédé selon la revendication 4, caractérisé en ce que la concentration en ions H⁺ dans la solution acide de gallium sortant de l'étape (ii) est comprise entre 3,5 N et 4,5 N.

6. Procédé selon l'une des revendications 1 à 5, caractérisé en ce qu'on contrôle la concentration en ions H⁺ et halogénures dans la solution acide après l'étape (iv) avant son recyclage dans l'étape (ii).

7. Procédé selon l'une des revendications 1 à 6, caractérisé en ce que l'agent extractant précité est une hydroxyquinoléine substituée, un de ses dérivés ou un mélange de ceux-ci.

8. Procédé selon l'une des revendications 1 à 7, caractérisé en ce que l'extraction sélective du gallium dans l'étape (IV) est réalisée par passage de la solution acide de gallium sur une résine échangeuse d'ions basique.

9. Procédé selon l'une des revendications 1 à 7, caractérisé en ce que l'extraction sélective du gallium dans l'étape (IV) est réalisée par extraction liquide-liquide, l'agent extractant étant choisi parmi les agents anioniques ou les agents solvatants.

## Claims

1. Process for the recovery of gallium contained in very basic aqueous solutions by liquid-liquid extraction using an organic phase mainly consisting of an organic extractant and an organic solvent, which consists of the following stages:
(i) extracting the gallium from the very basic solution with the organic phase mentioned above,
(ii) extracting the gallium from the said organic phase with an acid,
(iii) adjusting the concentration of halide ions in the acid solution of gallium obtained in stage (ii),
(iv) selectively extracting the gallium from this acid solution and
(v) recovering the gallium thereby extracted,
characterised in that the acid solution employed in stage (ii) consists of part of the acid solution recovered in stage (iv) after the selective extraction of gallium.

2. Process according to claim 1 or 2, characterised in that the concentration of halide ions in stage (iii) is adjusted to a value of between 3.5 M and 8 M.

3. Process according to claim 1, characterised in that the adjustment of the halide ion concentration in stage (iii) is carried out by adding hydrochloric acid in the gaseous form or as a solution.

4. Process according to one of the preceding claims, characterised in that the acid solution of gallium leaving stage (ii) has an H⁺ ion concentration equal to or greater than 1.5 N and preferably between 1.5 and 6 N, the halide ion concentration being not greater than 2.5 M.

5. Process according to claim 4, characterised in that the H⁺ ion concentration in the acid solution of gallium leaving stage (ii) is between 3.5 N and 4.5 N.

6. Process according to one of claims 1 to 5, characterised in that the concentration of H⁺ and halide ions in the acid solution is monitored after stage (iv) before it is recycled into stage (ii).

7. Process according to one of claims 1 to 6, characterised in that the extractant mentioned above is a substituted hydroxyquinoline, one of the derivatives thereof or a mixture of the latter.

8. Process according to one of claims 1 to 7, characterised in that the selective extraction of gallium in stage (iv) is carried out by passing the acid solution of gallium through a basic ion exchange resin.

9. Process according to one of claims 1 to 7, characterised in that the selective extraction of gallium in stage (iv) is carried out by liquid-liquid extraction, the extractant being chosen from amongst anionic agents or solvating agents.

## Patentansprüche

1. Verfahren zur Gewinnung von Gallium aus stark basischen wässrigen Lösungen durch Flüssig/Flüssig-Extraktion mittels einer im wesentlichen aus einem organischen Extraktionsmittel und einem organischen Lösungsmittel bestehenden organischen Phase, enthaltend die folgenden Stufen:
(i) Extraktion des Galliums aus der sehr starken basischen Lösung mit der oben erwähnten organischen Phase,
(ii) Extraktion des Galliums aus der genannten organischen Phase mit einer sauren Lösung,
(iii) Einstellung der Konzentration an Halogenidionen der in der Stufe (ii) erhaltenen sauren Lösung des Galliums,
(iv) Selektive Extraktion des Galliums aus dieser sauren Lösung,
(v) Gewinnung des so extrahierten Galliums,
dadurch gekennzeichnet, daß die in der Stufe (ii) benutzte saure Lösung aus einem Teil der sauren Lösung besteht, die in der Stufe (iv) nach der selektiven Extraktion des Galliums anfällt.

2. Verfahren nach Anspruch 1, dadurch gekennzeichnet, daß man die Halogenidionenkonzentration in Stufe (iii) auf einen Wert zwischen 3,5 M und 8 M einstellt.

3. Verfahren nach Anspruch 1 oder 2, dadurch gekennzeichnet, daß die Einstellung der Haolgenidionenkonzentration in Stufe (iii) durch gasförmige oder gelöste Chlorwasserstoffsäure vorgenommen wird.

4. Verfahren nach einem der vorangehenden Ansprüche, dadurch gekennzeichnet, daß die in Stufe (ii) anfallende saure Lösung von Gallium eine H⁺-Ionenkonzentration aufweist, die gleich oder größer als 1,5 N ist und vorzugsweise zwischen 1,5 und 6 N liegt, wobei die Konzentration der Halogenidionen höchstens 2,5 M beträgt.

5. Verfahren nach Anspruch 4, dadurch gekennzeichnet, daß die Konzentration der H⁺-Ionen in der sauren Lösung des Galliums aus der Stufe (ii) zwischen 3,5 N und 4,5 N liegt.

6. Verfahren nach einem der Ansprüche 1 bis 5, dadurch gekennzeichnet, daß man die Konzentration der H⁺-Ionen und der Halogenidionen in der sauren Lösung nach der Stufe (iv) vor ihrer Rückführung in die Stufe (ii) kontrolliert.

7. Verfahren nach einem der Ansprüche 1 bis 6, dadurch gekennzeichnet, daß das erwähnte Extraktionsmittel ein substituiertes Hydroxychinolin, eines seiner Derivate oder ein Gemisch von beiden ist.

8. Verfahren nach einem der Ansprüche 1 bis 7, dadurch gekennzeichnet, daß die selektive Extraktion des Galliums in der Stufe (iv) realisiert wird, indem die saure Lösung des Galliums über ein basisches Ionenaustauscherharz geleitet wird.

9. Verfahren nach einem der Ansprüche 1 bis 7, dadurch gekennzeichnet, daß die selektive Extraktion des Galliums in der Stufe (iv) durch Flüssig/Flüssig-Extraktion erfolgt, wobei als Extraktionsmittel anionische oder solvatisierende Reagentien gewählt werden.
